Europäisches Patentamt

European Patent Office

Office européen des brevets

(11) Veröffentlichungsnummer: **0 290 842**
**A2**

# (12) EUROPÄISCHE PATENTANMELDUNG

(21) Anmeldenummer: 88106504.9

(22) Anmeldetag: 22.04.88

(51) Int. Cl.⁴: **G01F 23/14 , G01F 25/00**

(30) Priorität: 15.05.87 DE 3716427

(43) Veröffentlichungstag der Anmeldung:
**17.11.88 Patentblatt 88/46**

(84) Benannte Vertragsstaaten:
**BE DE ES FR GB**

(71) Anmelder: **Krupp Polysius AG**
**Graf-Galen-Strasse 17**
**D-4720 Beckum(DE)**

(72) Erfinder: **Hoppe, Ernst, Dipl.-Ing.**
**Im Kreggenfeld 9**
**D-4777 Welver(DE)**
Erfinder: **Adrian, Franz-Josef, Dipl.-Ing.**
**Nordwalderstrasse 7a**
**D-4775 Lippetal(DE)**

(74) Vertreter: **Tetzner, Volkmar, Dr.-Ing. Dr. jur.**
**Van-Gogh-Strasse 3**
**D-8000 München 71(DE)**

(54) **Verfahren zur Bestimmung der Füllmenge und zur Kalibrierung einer pneumatischen Fördereinrichtung.**

(57) Die Erfindung betrifft ein Verfahren zur Bestimmung der Füllmenge einer pneumatischen Fördereinrichtung durch drei Druckmessungen. Weiterhin betrifft die Erfindung ein Verfahren zum Kalibrieren einer pneumatischen Fördereinrichtung unter Verwendung dieser Füllmengen-Bestimmung.

EP 0 290 842 A2

# Verfahren zur Bestimmung der Füllmenge und zur Kalibrierung einer pneumatischen Fördereinrichtung

Die Erfindung betrifft ein Verfahren (entsprechend dem Oberbegriff des Anspruches 1) zur Bestimmung der Füllmenge einer pneumatischen Fördereinrichtung sowie ein Verfahren (entsprechend dem Oberbegriff des Anspruches 2) zur Kalibrierung einer pneumatischen Fördereinrichtung unter Verwendung des erfindungsgemäßen Verfahrens zur Bestimmung der Füllmenge.

Die Füllmenge einer pneumatischen Fördereinrichtung wird bisher im allgemeinen durch Wägung der auf Wägezellen angeordneten pneumatischen Fördereinrichtung bestimmt. Der hierfür erforderliche konstruktive und meßtechnische Aufwand ist beträchtlich, zumal in dem Signal der Wägezellen gewisse Störkräfte enthalten sind.

Gegenstand der EP-A-219 744 ist ein Verfahren zum Kalibrieren einer pneumatischen Fördereinrichtung, bei dem bei unterbrochener Gutzuführung eine numerische Integration der Differenz zwischen dem Förderdruck und dem Leerwiderstand erfolgt und die in einer bestimmten Zeitspanne auftretende Abnahme des Füllgewichtes bestimmt wird. Die Ermittlung des Füllgewichtes erfolgt hierbei in der vorstehend genannten Weise durch Wägung der pneumatischen Fördereinrichtung.

Der Erfindung liegt nun die Aufgabe zugrunde, ein Verfahren zur Bestimmung der Füllmenge einer pneumatischen Fördereinrichtung (sowie ein hierauf basierendes Verfahren zur Kalibrierung der pneumatischen Fördereinrichtung) zu entwickeln, das sich durch einen geringen konstruktiven und meßtechnischen Aufwand und eine für die praktischen Bedürfnisse ausreichende Genauigkeit auszeichnet.

Diese Aufgabe wird erfindungsgemäß durch die Merkmale des Anspruches 1 bzw. 2 gelöst. Zweckmäßige Ausgestaltungen der Erfindung sind Gegenstand der Unteransprüche.

Ein Ausführungsbeispiel der Erfindung wird im folgenden anhand der Zeichnung näher erläutert. Es zeigen

Fig. 1 eine Schemadarstellung einer pneumatischen Fördereinrichtung, deren Füllmengen-Bestimmung bzw. Kalibrierung nach dem erfindungsgemäßen Verfahren erfolgt,

Fig. 2 bis 4 Diagramme zur Erläuterung des Kalibrierverfahrens.

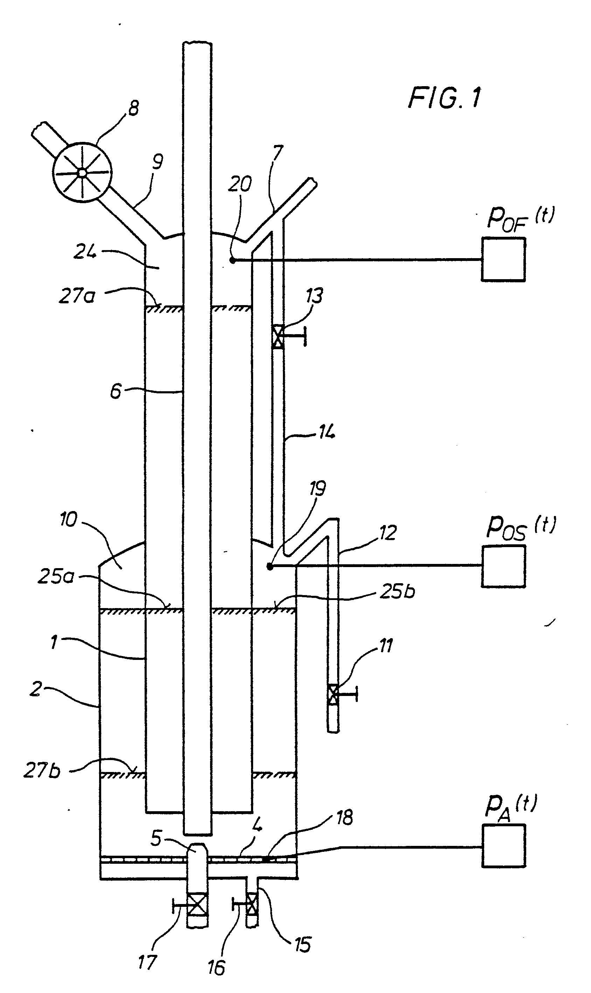

Die pneumatische Fördereinrichtung gemäß Fig. 1 enthält ein Fördergefäß 1 und ein ringförmig ausgebildetes, koaxial zum Fördergefäß 1 angeordnetes Speichergefäß 2. Das am unteren Ende offene Fördergefäß 1 taucht in das Speichergefäß 2 ein und ist mit die sem nach Art kommunizierender Röhren verbunden.

Das Fördergefäß 1 und das Speichergefäß 2 sind mit einem gemeinsamen pneumatischen Auflockerungsboden 4 versehen. Durch den Auflockerungsboden 4 ist eine Förderdüse 5 hindurchgeführt, über der sich die Eintrittsöffnung einer pneumatischen Förderleitung 6 befindet, die das Fördergefäß 1 in vertikaler Richtung durchsetzt.

Im oberen Bereich des Fördergefäßes 1 ist ein Entlüftungsanschluß 7 sowie ein mit einer Zellenradschleuse 8 versehener Gutzuführanschluß 9 vorgesehen.

Der luftgefüllte obere Bereich 10 des Speichergefäßes 2 ist mit einem durch ein Ventil 11 regelbaren Luftzuführanschluß 12 sowie mit einem durch ein Ventil 13 regelbaren Luftabführanschluß 14 verbunden.

Der Raum unterhalb des Auflockerungsbodens 4 ist mit einem Luftzuführanschluß 15 versehen, in dem ein Konstantmengenregelventil 16 angeordnet ist. Ein weiteres solches Ventil 17 ist der Förderdüse 5 vorgeschaltet.

Es sind weiterhin drei Druckmeßsonden 18, 19, 20 vorgesehen, von denen die Druckmeßsonde 18 den Förderdruck $p_A(t)$ mißt,

die Druckmeßsonde 19 den im oberen Bereich 10 des Speichergefäßes 2 herrschenden Oberdruck $p_{OS}(t)$ und

die Druckmeßsonde 20 den im oberen Bereich 24 des Fördergefäßes 1 herrschenden Oberdruck $p_{OF}(t)$.

Die Funktion der in Fig. 1 dargestellten pneumatischen Fördereinrichtung im Betrieb ist folgendermaßen:

Herrscht im oberen Bereich 10 des Speichergefäßes 2 Atmosphärendruck (ebenso wie über den Entlüftungsanschluß 7 auch im oberen Bereich 24 des Fördergefäßes 1), so nimt das Gut im Fördergefäß 1 und im Speichergefäß 2 gleiche Füllhöhe ein (Füllstand 25a, 25b). Der pneumatische Auflockerungsdruck unter dem Auflockerungsboden 4 bzw. der etwa gleich große pneumatische Druck an der Förderdüse 5 entsprechen dem Füllstand im Fördergefäß 1 bzw. einer bestimmten Förderleistung. In das Fördergefäß 1 wird über den Gutzuführanschluß 9 so viel Gut nachgespeist, wie über die Förderleitung 6 ausgetragen wird.

Treten aus irgendwelchen Gründen Schwankungen der Gutzufuhr auf, so wird der Füllstand im Fördergefäß 1 dadurch auf dem vorgegebenen Wert gehalten, daß bei einer etwaigen Verringerung des Füllstandes im Fördergefäß 1 Gut aus dem Speichergefäß 2 in das Fördergefäß 1 überführt wird. Dies erfolgt durch Vergrößerung des Druckes $\dot{p}_{OS}(t)$ im oberen Bereich 10 des Speichergefäßes 2. Steigt dagegen der Füllstand im Fördergefäß 1 über den der gewünschten Förderleistung entsprechenden Wert, so wird der Druck $p_{OS}(t)$ verringert und hierdurch Gut aus dem Fördergefäß 1 in das Speichergefäß 2 überführt.

Soll die Austragsleistung des Fördergefäßes 1 rasch vergrößert werden, was eine entsprechende Vergrößerung des Füllstandes im Fördergefäß 1 bedingt, so wird im oberen Bereich 10 des Speichergefäßes 2 ein entsprechend großer Druck aufgebaut, so daß sich im Speichergefäß 2 der Füllstand 27b und im Fördergefäß 1 ein Füllstand 27a einstellt. Bei Vorgabe einer höheren gewünschten Förderleistung wird also schlagartig Gut aus dem Speichergefäß 2 in das Fördergefäß 1 gedrückt. Umgekehrt wird bei einer gewünschten Verkleinerung der Austragsleistung des Fördergefäßes 1 durch Druckentlastung im Speichergefäß 2 (Öffnen des Ventiles 13) Gut rasch aus dem Fördergefäß 1 in das Speichergefäß 2 überführt.

Im folgenden wird nun die Bestimmung der Füllmenge der pneumatischen Fördereinrichtung erläutert (diese Füllmengen-Bestimmung ist ein Bestandteil des anschließend beschriebenen Verfahrens zur Kalibrierung der pneumatischen Fördereinrichtung). Hinsichtlich der in dieser Beschreibung verwendeten Formelzeichen wird auf die Zusammenstellung und Erläuterung der Formelzeichen am Ende der Beschreibung Bezug genommen.

Im fluidisierten Zustand des in der pneumatischen Fördereinrichtung befindlichen Gutes ist der Förderdruck $p_A(t)$ näherungsweise dem Produkt von Füllstand und Material-Schüttgewicht zuzüglich Oberdrücken gleichzusetzen.

Störgrößen, wie Wandreibung, Strömungswiderstand und nicht vollkomene Fluidisierung, werden bei der Ermittlung des Förderdruckes $p_A(t)$ berücksichtigt. Die Querschnittsfläche $A_S$ des Speichergefäßes 2 und die Querschnittsfläche $A_F$ des Fördergefäßes 1 sind über die gesamte Materialhöhe konstant. Damit errechnet sich die Füllmenge $m(t)$ der pneumatischen Fördereinrichtung wie folgt: (1) $\quad m(t) = m_S(t) + m_F(t)$

(2) $\quad m_S(t) = A_S \cdot h_S(t) \cdot \gamma_S$

(3) $\quad m_F(t) = A_F \cdot h_F(t) \cdot \gamma_F$

Der Förderdruck $p_A(t)$ läßt sich wie folgt ausdrücken: (4) $\quad p_A(t) = h_S(t) \cdot \gamma_S + p_{OS}(t)$

(5) $\quad p_A(t) = h_F(t) \cdot \gamma_F + p_{OF}(t)$

Aus (2), (3), (4) und (5) ergibt sich (6) $\quad m_S(t) = A_S \cdot [p_A(t) - p_{OS}(t)]$

(7) $\quad m_F(t) = A_F \cdot [p_A(t) - p_{OF}(t)]$

(8) $\quad m(t) = A_S \cdot [p_A(t) - p_{OS}(t)] + A_F \cdot [p_A(t) - p_{OF}(t)]$

Da die Querschnittsflächen $A_S$ und $A_F$ bekannt sind, kann man durch Messung der Drücke $p_A(t)$, $p_{OS}(t)$ und $p_{OF}(t)$ gemäß Gleichung (8) die Füllmenge $m(t)$ der pneumatischen Fördereinrichtung ermitteln.

Basierend auf der vorstehend beschriebenen Füllmengen-Bestimmung läßt sich ein einfacher Füllmengenregelkreis aufbauen, der durch Messung der drei Drücke $p_A(t)$, $p_{OS}(t)$, $p_{OF}(t)$ und Verstellung der Gutzuführmenge ein gewünschtes Füllgewicht konstant hält. Durch Steuerung des Oberdruckes $p_{OS}(t)$ mit Hilfe der Ventile 11 und 13 wird der Differenzdruck $p(t)$ und damit die Förderleistung geregelt.

Im folgenden wird weiterhin erläutert, wie sich die pneumatische Fördereinrichtung unter Verwendung des beschriebenen Verfahrens zur Bestimmung der Füllmenge kalibrieren läßt.

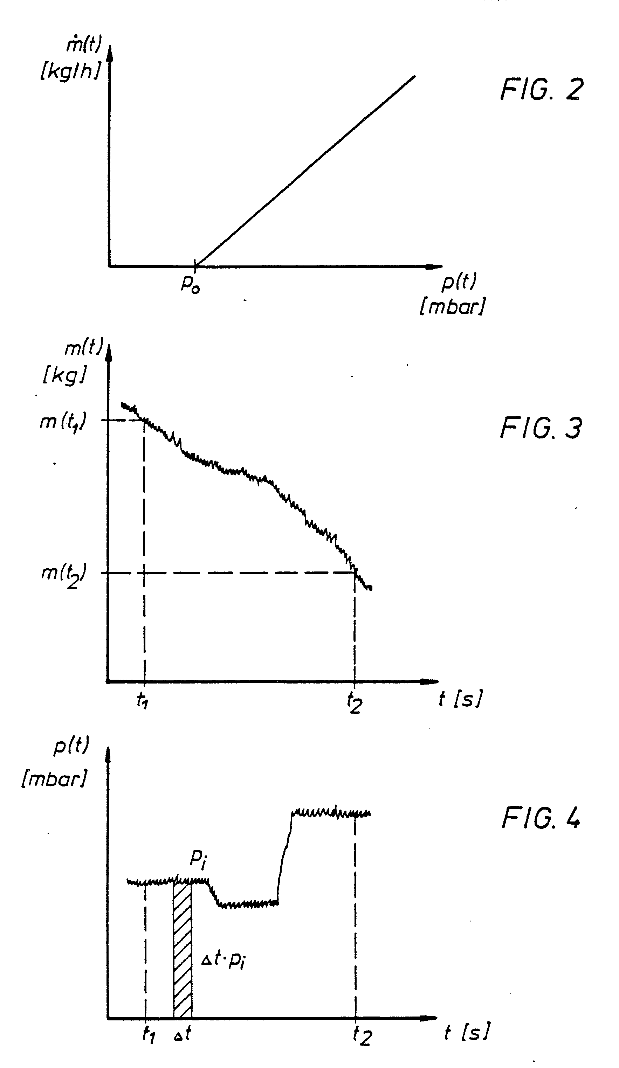

Bei den der Erfindung zugrunde liegenden Versuchen wurde festgestellt, daß zwischen dem Differenzdruck $p(t)$ und der Förderleistung (t) die in Fig. 2 veranschaulichte lineare Abhängigkeit besteht, wobei der Differenzdruck $p_0$ während der Förderung konstant ist. Die Steigung der Geraden wird im folgenden als Kalibrierfaktor k bezeichnet.

Gemäß Fig. 2 besteht zwischen der Förderleistung $\dot{m}(t)$, dem Kalibrierfaktor k, dem Differenzdruck $p(t)$ und dem Differenzdruck $p_0$ folgender Zusammenhang: (10) $\quad \dot{m}(t) = k \cdot [p(t) - p_0]$

Ziel der Kalibrierung ist es, den unbekannten Kalibrierfaktor k zu ermitteln. $p_0$ wird während der Inbetriebsetzung einmalig bestimmt.

Zum Kalibrieren wird die Gutzufuhr zum Fördergefäß 1 (über den Gutzuführanschluß 9) unterbrochen. Der der gerade gewünschten Förderleistung entsprechende Füllstand im Fördergefäß 1 wird in der bereits erläuterten Weise durch Steuerung des Druckes im oberen Bereich 10 des Speichergefäßes 2 konstantgehalten. Während der Kalibrierung erfolgt somit die Nachführung des Gutes zum Fördergefäß 1 ausschließlich durch das Speichergefäß 2.

Die Abnahme der Füllmenge $m(t)$ über die Zeit t ist ein Maß für die Förderleistung: (11) $\quad \dot{m}(t) = -\frac{dm}{dt}$

Fig. 3 veranschaulicht die während des Kalibriervorganges auftretende Abnahme der Füllmenge $m(t)$. Hierbei ist angenommen, daß die Kalibrierung im Zeitpunkt $t_1$ beginnt und im Zeitpunkt $t_2$ endet. Die Füllmenge zu Beginn des Kalibrierungsvorganges ist $m(t_1)$ und am Ende $m(t_2)$. Aus den Gleichungen (10) und (11) ergibt sich (12) $-\frac{dm}{dt} = k \cdot [p(t) - p_o]$.

Hieraus folgt

$$(13) \qquad -\int_{t_1}^{t_2} dm = k \cdot \int_{t_1}^{t_2} \left[ p(t) - p_o \right] dt$$

$$(14) \qquad -\left[ m(t_2) - m(t_1) \right] = \Delta m = k \cdot \int_{t_1}^{t_2} \left[ p(t) - p_o \right] dt$$

Führt man nun die Integration des Druckwertes $p(t)$ über die Zeit mittels numerischer Integration in $n$ Abtastschritten durch, so läßt sich die Gleichung (14) wie folgt schreiben:

$$(15) \qquad \Delta m = k \cdot \Delta t \cdot \left( \sum_{i=1}^{n} p_i - n \; p_o \right)$$

In dieser Gleichung (15) sind $k$ und $p_o$ unbekannt. Bei der Inbetriebsetzung muß die Unbekannte $p_o$ wie folgt ermittelt werden.

Bei zwei unterschiedlichen Förderleistungen werden die Füllmengendifferenzen $\Delta m_1$ und $\Delta m_2$ und die Integrale der zugehörigen Druckwerte bzw. $\Sigma p_i$ bzw. $\Sigma p_j$ ermittelt.

$$(16) \qquad \Delta m_1 = k \cdot \Delta t \cdot \left( \sum_{i=1}^{n_1} p_i - n_1 p_o \right)$$

$$(17) \qquad \Delta m_2 = k \cdot \Delta t \cdot \left( \sum_{j=1}^{n_2} p_j - n_2 p_o \right)$$

Aus (16) und (17) folgt:

$$(18) \qquad p_O = \frac{\Delta m_2 \cdot \sum\limits_{i=1}^{n_1} p_i - \Delta m_1 \cdot \sum\limits_{j=1}^{n_2} p_j}{\Delta m_2 \cdot n_1 - \Delta m_1 \cdot n_2}$$

Damit ergibt sich aus der Cleichung (15) der gesuchte Kalibrierfaktor k wie folgt:

$$(19) \qquad k = \frac{\Delta m}{\Delta t \cdot \sum\limits_{i=1}^{n} \left( p_i - p_O \right)}$$

Fig. 4 veranschaulicht dabei einen möglichen Verlauf des Differenzdruckes $p(t)$ während des Kalibriervorganges, wobei angenommen ist, daß während des Kalibrierens zwei Änderungen der Förderleistung durchgeführt werden.

Mit dem so ermittelten Kalibrierfaktor k wird der Soll-und Ist-Wert oder nur der Ist-Wert der Förderleistung korrigiert.

Zu Beginn und am Ende des Kalibriervorganges wird das Füllmengensignal daraufhin überprüft, ob keine größeren Signalschwankungen vorliegen, die auf äußeren Störungen beruhen. So beginnt die Integration des Differenzdruckwertes $p(t)$ bei $t_1$ erst dann - unter Übernahme der zu Beginn der Kalibrierung bestehenden Füllmenge $m(t_1)$ -, nachdem die Füllmenge nach Unterbrechung der Gutzufuhr während einer vorgegebenen Zeitspanne annähernd gleichmäßig gefallen ist (vgl. Fig. 3). Die Integration des Differenzdruckwertes $p(t)$ wird erst dann beendet - wobei gleichzeitig die nunmehr vorhandene Füllmenge $m(t_2)$ übernommen wird -, wenn eine Mindestmenge $\Delta m_{KAL}$ abgezogen worden und die Füllmenge während einer vorgegebenen weiteren Zeitspanne annähernd gleichmäßig gefallen ist. Beim Unterschreiten einer vorgegebenen Füllmenge $m_{min}$ wird die Kalibrierung unterbrochen.

Zusammenstellung der verwendeten Formelzeichen

a) Bestimmung der Füllmenge
$m(t)$     Füllmenge der Fördereinrichtung
$m_S(t)$     Füllmenge im Speichergefäß
$m_F(t)$     Füllmenge im Fördergefäß
$A_S$     Querschnittsfläche des Speichergefäß
$A_F$     Querschnittsfläche des Fördergefäß
$h_S(t)$     Materialfüllstand im Speichergefäß
$h_F(t)$     Materialfüllstand im Fördergefäß
$\gamma_S$     Materialschüttgewicht im Speichergefäß
$\gamma_F$     Materialschüttgewicht im Fördergefäß
$p_A(t)$     Förderdruck als Funktion der Zeit t (Luftdruck vor der Förderdüse 5 bzw. Druck unter-oder oberhalb des Auflockerungsbodens 4)
$p_{OF}(t)$     Oberdruck im Fördergefäß
$p_{OS}(t)$     Oberdruck im Speichergefäß

b) Kalibrierung
$\dot{m}(t)$ Förderleistung als Funktion der Zeit t
$p(t)$     Differenzdruck als Funktion der Zeit t; Differenzdruck zwischen dem Förderdruck $p_A(t)$ und dem Druck am Ende der Förderleitung $p_E(t)$
$p_E(t)$     Druck am Ende der Förderleitung als Funktion der Zeit t (Luftdruck am Förderleitungsende oder am Empfangsort)
$p_o$     Differenzdruck $p(t)$ bei $\dot{m}(t) = o$
$p_i$     Werte von $p(t)$ zu den n Abtastzeitpunkten zwischen $i = 1$ und $i = n$

k    Kalibrierfaktor (Steigung der Geraden)

$\frac{dm}{dt}$    Änderung der Füllmenge über der Zeit t

$m(t_1)$    Füllmenge zu Beginn der Kalibrierung (Zeitpunkt $t_1$)

$m(t_2)$    Füllmenge am Ende der Kalibrierung (Zeitpunkt $t_2$)

$\Delta m$    $m(t_1) - m(t_2)$

$\Delta m_{KAL}$    Mindestmenge, die beim Kalibrieren abgezogen wird

$\Delta t$    Zeit zwischen zwei Abtastschritten

n    Anzahl der Abtastschritte während der Kalibrierung

$m_{min}$    Mindestfüllmenge; beim Unterschreiten der Mindestfüllmenge wird der Kalibriervorgang abgebrochen

## Ansprüche

1. Verfahren zur Bestimmung der Füllmenge einer pneumatischen Fördereinrichtung,

a) enthaltend ein Fördergefäß (1) und ein Speichergefäß (2), die nach Art kommunizierender Röhren miteinander verbunden sind,

b) wobei das Fördergefäß (1) und das Speichergefäß (2) einen gemeinsamen pneumatischen Auflockerungsboden (4) aufweisen

c) und im Bodenbereich des Fördergefäßes (1) eine Förderdüse (5) sowie nahe dieser Förderdüse die Eintrittsöffnung einer pneumatischen Förderleitung (6) angeordnet ist,

d) wobei ferner das Fördergefäß (1) im oberen Bereich mit einem Entlüftungsanschluß (7) versehen ist, so daß der pneumatische Auflockerungsdruck im Fördergefäß (1) die Förderleistung bestimmt,

e) und wobei durch Änderung des im Speichergefäß (2) herrschenden Oberdruckes ($p_{OS}$) Gut aus dem Speichergefäß (2) in das Fördergefäß (1) bzw. aus dem Fördergefäß (1) in das Speichergefäß (2) überführbar und dadurch die Förderleistung einstellbar ist,

dadurch gekennzeichnet, daß

f) die Bestimmung der Füllmenge m(t) der Fördereinrichtung durch Messung
- des Förderdruckes $p_A(t)$,
- des Oberdruckes $p_{OS}(t)$ im Speichergefäß (2) ·
- sowie des Oberdruckes $p_{OF}(t)$ des Förderfäßes (1)
nach der Gleichung

(8) $m(t) = A_S \cdot [p_A(t) - p_{OS}(t) + A_F \cdot [p_A(t) - P_{OF}(t)]$

erfolgt, wobei bedeuten

$A_S$    die Querschnittsfläche des Speichergefäßes (2),

$A_F$    die Querschnittsfläche des Fördergefäßes (1).

2. Verfahren zur Kalibrierung einer pneumatischen Fördereinrichtung unter Verwendung des Verfahrens gemäß Anspruch 1 zur Bestimmung der Füllmenge,

gekennzeichnet durch folgende Merkmale:

a) das Kalibrieren der Fördereinrichtung erfolgt bei unterbrochener Gutzuführung durch numerische Integration des Differenzdrucks p(t) zwischen dem Förderdruck $p_A(t)$ und dem Druck $p_E(t)$ am Ende der Förderleitung sowie durch Bestimmung der in einer Zeitspanne $t_2 - t_1$ auftretenden Abnahme $m(t_2) - m(t_1)$ der Füllmenge;

d) die Übernahme der Füllmenge $m(t_1)$ zu Beginn der Kalibrierung und der Start der Integration des Druckwertes p(t) erfolgen erst, nachdem die Füllmenge nach Unterbrechung der Gutzufuhr während einer vorgegebenen Zeitspanne annäherndgleichmäßig gefallen ist.

3. Verfahren nach Anspruch 2, dadurch gekennzeichnet, daß die Integration des Druckwertes p(t) erst dann beendet und die nunmehr vorhandene Füllmenge $m(t_2)$ übernommen wird, wenn eine Mindestmenge ($\Delta m_{KAL}$) abgezogen worden ist und die Füllmenge während einer vorgegebenen weiteren Zeitspanne annähernd gleichmäßig gefallen ist.

4. Verfahren nach Anspruch 2, dadurch gekennzeichnet, daß beim Unterschreiten einer vorgegebenen Füllmenge ($m_{min}$) die Kalibrierung abgebrochen wird.

5. Verfahren nach Anspruch 2, dadurch gekennzeich net, daß wahlweise der Soll-und Ist-Wert oder nur der Ist-Wert der Förderleistung entsprechend dem ermittelten Kalibrierfaktor (k) geändert werden.

FIG.1

0 290 842

FIG. 2

FIG. 3

FIG. 4